# EUROPEAN PATENT APPLICATION

(11) **EP 4 760 596 A2**
(43) Date of publication of application: **17.06.2026**
(21) Application number: 25209682.1
(22) Date of filing: 20.10.2025
(51) Int. Cl.: G06N 3/045, G06N 3/063

(54) **METHOD AND SYSTEM FOR PERFORMING MULTI-RATE CONVOLUTION IN A NEURAL NETWORK**

(30) Priority: 11.12.2024 IN 202411097944
(71) Applicant: HCL Technologies Limited, New Delhi 110019 (IN)
(72) Inventor: Balasubramaniyan, Prasanna Venkatesh, 600119 Chennai (IN); Gopalakrishnan, Sainarayanan, 600119 Chennai (IN); Rajagopal, Gunamani, 600119 Chennai (IN)
(74) Representative: Fabry, Martin Heinrich Ulrich

(57) **Abstract**

The disclosure relates to a system for performing multi-rate convolution in a neural network is disclosed. The system may include a multi-rate convolution engine that may include a plurality of Multiply and Accumulator (MAC) modules. Each of the plurality of MAC modules may be configured to perform a convolution operation by applying a filter on image data, to generate convolution data. The system may further include a local controller coupled to the multi-rate convolution engine. The local controller may be configured to activate the multi-rate convolution engine to perform a multi-rate convolution. The multi-rate convolution may include receiving a first input signal indicative of a convolution rate, a feature size, and a network load, and selecting a set of MAC modules from the plurality of MAC modules, based on the convolution rate and a filter size, and causing the set of MAC modules to parallelly perform the convolution operation.

## Description

### Technical Field

This disclosure relates generally to accelerators, and in particular, to a system for performing multi-rate convolution in a neural network.

### Background

Deep Neural Network (DNN) are deployed at silicon level for better performance. However, growing complexities in the DNN architecture require a specialized hardware accelerator. Dedicated hardware accelerators are known to be more advantageous in terms of performance, scalability and power. Further, the dedicated hardware accelerators are more suitable for imaging and computer vision applications, in neural networks, such as Convolution Neural Networks (CNNs).

Configurability of the accelerator is an essential requirement to accommodate large image size, depth, and varying filters in each stage of the convolutions. This further helps in computationally intensive tasks and in reusing the same resource across many CNN layers. The configurable hardware (also known as leaf-level) accelerator also allows for building a scalable architecture at silicon-level. Further, for safety critical or mission critical applications, the accelerator should have an integrated functional safety mechanisms and diagnostics features at the silicon level to address the functional safety requirements. Further, the known hardware accelerators are prone to Single Event Upset (SEU) and Single Event Transition (SET) faults due to EMI or other radiation effects (based on the device FIT and Grade), that could lead to dangerous failures. As such, accelerators are required to have functional safety mechanisms as well to make them suitable for automotive, industrial, medical, aerospace and space applications.

Therefore, there is a need for an accelerator that complies with the above requirements and also possesses features of scalability, reconfigurability, low-power options, network agnostic capability, as well as integrated functional safety.

### SUMMARY

In an embodiment, a system for performing multi-rate convolution in a neural network is disclosed. The system may include a multi-rate convolution engine that may include a plurality of Multiply and Accumulator (MAC) modules. Each of the plurality of MAC modules may be configured to perform a convolution operation by applying a filter on image data, to generate convolution data. The system may further include a local controller coupled to the multi-rate convolution engine. The local controller may be configured to activate the multi-rate convolution engine to perform a multi-rate convolution. The multi-rate convolution may include receiving a first input signal indicative of a convolution rate, a feature size, and a network load, selecting a set of MAC modules from the plurality of MAC modules, based on the convolution rate and a filter size, and causing the set of MAC modules to parallelly perform the convolution operation.

In an embodiment, another system for performing multi-rate convolution in a neural network is disclosed. The system may include a multi-rate convolution engine that may include a plurality of Multiply and Accumulator (MAC) modules, each of which may be configured to perform a convolution operation by applying a filter on image data, to generate convolution data. The system may further include a fast convolution engine that may include a plurality of multiplier elements, each of which may be configured to perform a multiplication operation in a single clock cycle. The fast convolution engine may further include a plurality of adder elements, each of which is configured to add data in the clock cycle. The system may further include a single MAC convolution data-path that may include a single MAC module configured to perform a convolution operation by applying a filter on image data, to generate convolution data. The system may further include a local controller coupled to the multi-rate convolution engine, the fast convolution engine, and the single MAC convolution data-path. The local controller may be configured to select at least one of: the multi-rate convolution engine, the fast convolution engine, and the single MAC convolution data-path, to perform the convolution operation, based on a second input signal.

Accordingly, an embodiment relates to a system for performing multi-rate convolution in a neural network, the system comprising: a multi-rate convolution engine comprising: a plurality of Multiply and Accumulator (MAC) modules, each of the plurality of MAC modules configured to perform a convolution operation by applying a filter on image data, to generate convolution data; a fast convolution engine comprising: a plurality of multiplier elements, each of the plurality of multiplier elements configured to perform a multiplication operation in a single clock cycle; and a plurality of adder elements, each of the plurality of adder elements configured to add data in the clock cycle; a single MAC convolution data-path, comprising: a single MAC module configured to perform a convolution operation by applying a filter on image data, to generate convolution data; a local controller coupled to the multi-rate convolution engine, the fast convolution engine, and the single MAC convolution data-path, wherein the local controller is configured to select at least one of: the multi-rate convolution engine, the fast convolution engine, and the single MAC convolution data-path, to perform the convolution operation, based on a second input signal indicative of the feature size and the network load. In some embodiments, the local controller is configured to activate the multi-rate convolution engine to perform a multi-rate convolution by: receiving a first input signal indicative of a convolution rate, feature size, and a network load; selecting a set of MAC modules from the plurality of MAC modules, based on the convolution rate, the network load, and the filter size; and causing the set of MAC modules to parallelly perform the convolution operation; wherein the local controller is configured to activate the fast convolution engine to perform a fast convolution, by: causing the plurality of multiplier elements and the plurality of adder elements, to parallelly perform the convolution operation; and wherein the local controller is configured to activate the single MAC convolution data-path to perform the convolution operation.

In another embodiment, a method of performing multi-rate convolution in a neural network is disclosed. The method may include receiving a first input signal indicative of a convolution rate, a feature size, and a network load. The method may further include selecting a set of Multiply and Accumulator (MAC) modules from a plurality of MAC modules of a multi-rate convolution engine, based on the convolution rate, the filter size, and the network load. Each of the plurality of MAC modules may be configured to perform a convolution operation by applying a filter on image data, to generate convolution data.

Accordingly, an embodiment relates to a method of performing multi-rate convolution in a neural network, the method comprising: receiving a first input signal indicative of a convolution rate, a feature size, and a network load; and selecting a set of Multiply and Accumulator (MAC) modules from a plurality of MAC modules of a multi-rate convolution engine, based on the convolution rate, the filter size, and the network load, wherein each of the plurality of MAC modules is configured to perform a convolution operation by applying a filter on image data, to generate convolution data.

In yet another embodiment, a method of performing multi-rate convolution in a neural network is disclosed. The method may include receiving an input signal indicative of a feature size and a network load. The method may further include selecting at least one of: a multi-rate convolution engine, a fast convolution engine, and a single MAC convolution data-path, to perform a convolution operation, based on the feature size and the network load. The multi-rate convolution engine comprises may include a plurality of Multiply and Accumulator (MAC) modules, each of which may be configured to perform a convolution operation by applying a filter on image data, to generate convolution data. The fast convolution engine may include a plurality of multiplier elements, each of which may be configured to perform a multiplication operation in a single clock cycle, and a plurality of adder elements, each of which may be configured to add data in the clock cycle. The single MAC convolution data-path may include a single MAC module configured to perform a convolution operation by applying a filter on image data, to generate convolution data.

Accordingly, an embodiment relates to a method of performing multi-rate convolution in a neural network, the method comprising: receiving an input signal indicative of a feature size and a network load; and selecting at least one of: a multi-rate convolution engine, a fast convolution engine, and a single MAC convolution data-path, to perform a convolution operation, based on the feature size and the network load, wherein multi-rate convolution engine comprises: a plurality of Multiply and Accumulator (MAC) modules, each of the plurality of MAC modules configured to perform a convolution operation by applying a filter on image data, to generate convolution data; wherein the fast convolution engine comprises: a plurality of multiplier elements, each of the plurality of multiplier elements configured to perform a multiplication operation in a single clock cycle; and a plurality of adder elements, each of the plurality of adder elements configured to add data in the clock cycle; and wherein the single MAC convolution data-path comprises: a single MAC module configured to perform a convolution operation by applying a filter on image data, to generate convolution data.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for performing multi-rate convolution in a neural network, in accordance with some embodiments of the present disclosure.
**FIG. 2** is a block diagram representing an internal architecture of a system performing multi-rate convolution in a neural network (also referred to as Convolution Multiply and Accumulate - Xtended Generation2 (CMAC-XG2) engine), in accordance with some embodiments.
**FIG. 3A-3C** are block diagrams of a multi-rate convolution MAC engine with different example modes of fast convolution activated for a kernel size of 9x9, in accordance with some embodiments.
**FIG. 3D** is a Table-1 showing a configuration of the multi-rate convolution MAC engine in the fast convolution modes of FIG. 3A-3C, in accordance with some embodiments.
**FIG. 4A-4C** are block diagrams of a multi-rate convolution MAC engine with different example modes of fast convolution activated for a kernel size of 7x7, in accordance with some embodiments.
**FIG. 4D** is a Table-2 showing a configuration of the multi-rate convolution MAC engine in the fast convolution modes of FIG. 4A-4C, in accordance with some embodiments.
**FIG. 5A-5C** are block diagrams of a multi-rate convolution MAC engine with different example modes of fast convolution activated for a kernel size of 5x5, in accordance with some embodiments.
**FIG. 5D** is a Table-3 showing a configuration of the multi-rate convolution MAC engine in the fast convolution modes of FIG. 5A-5C, in accordance with some embodiments.
**FIGs. 6A-6B** are block diagrams of a multi-rate convolution MAC engine with different example modes of fast convolution activated for a kernel size of 3x3, in accordance with some embodiments.
**FIG. 6C** is a Table-4 showing a configuration of the multi-rate convolution MAC engine in the fast convolution modes of FIG. 6A-6B, in accordance with some embodiments.
**FIGs. 7A-7C** are processes of performing the dilation convolution operation in different kernels, in accordance with some embodiments.
**FIG. 8** is a process diagram of performing convolution by the system for a neural network, in accordance with some embodiments.
**FIG. 9** is a flowchart of a method of performing multi-rate convolution in a neural network, in accordance with some embodiments.
**FIG. 10** is a flowchart of another method of performing multi-rate convolution in a neural network, in accordance with some embodiments.
**FIG. 11** is an exemplary computing system that may be employed to implement processing functionality for various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims. Additional illustrative embodiments are listed below.

The present disclosure relates to an accelerator (also referred to as "system" or "Convolution Multiply and Accumulate - Xtended Generation2 engine" or "CMAC-XG2 engine") for performing convolution in a neural network, for example, a convolution neural network (CNN). The CMAC-XG2 engine is capable of performing configurable multi-rate 1-dimensional (1D) or 2-dimensional (2D) or 3-dimensional (3D) convolution with functional safety capability. Further, the CMAC-XG2 engine also supports dilation convolution. Furthermore, multiple instances of the CMAC-XG2 engines allow performing of parallel row-wise convolution on a feature map with different kernel sizes and depths. Each CMAC-XG2 engine contains a parallel MAC-based fast convolution engine, that can be deployed for performance demanding applications. Also, based on the application requirement, the functional safety mechanism like Double Module Redundancy (DMR) or Triple-Module Redundancy (TMR) may be activated to address SEU or SET faults.

The CMAC-XG2 engine has a reconfigurable and area efficient architecture with functional safety mechanisms, to accommodate various kernel sizes and depths. Further, CMAC-XG2 engine implements different engines - namely a multi-rate convolution engine, a fast convolution engine, and a single MAC convolution data-path - that can be selectively activated according to the performance and suitability for FPGA or ASIC solutions. The CMAC-XG2 engine performs parallel 3D convolution that is more suitable for high throughput applications or large networks (for example, datacenter, medical imaging and automotive applications).

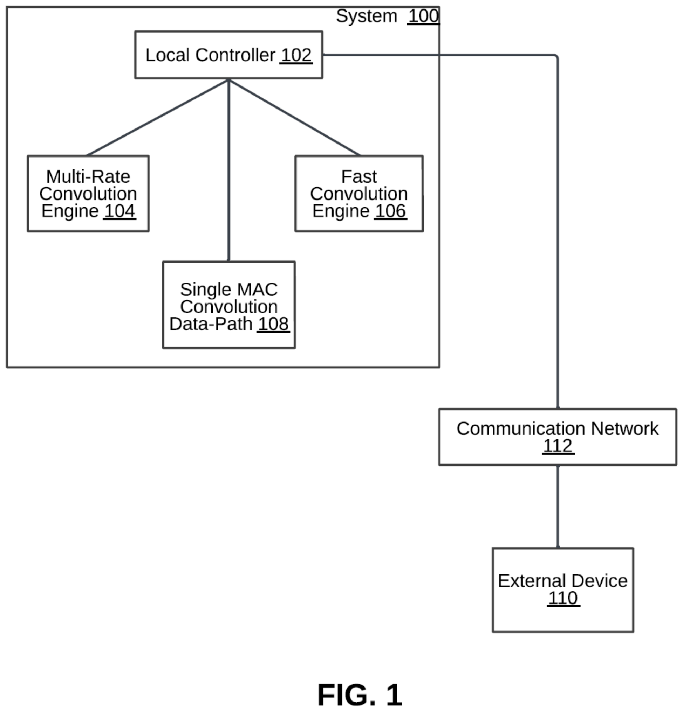

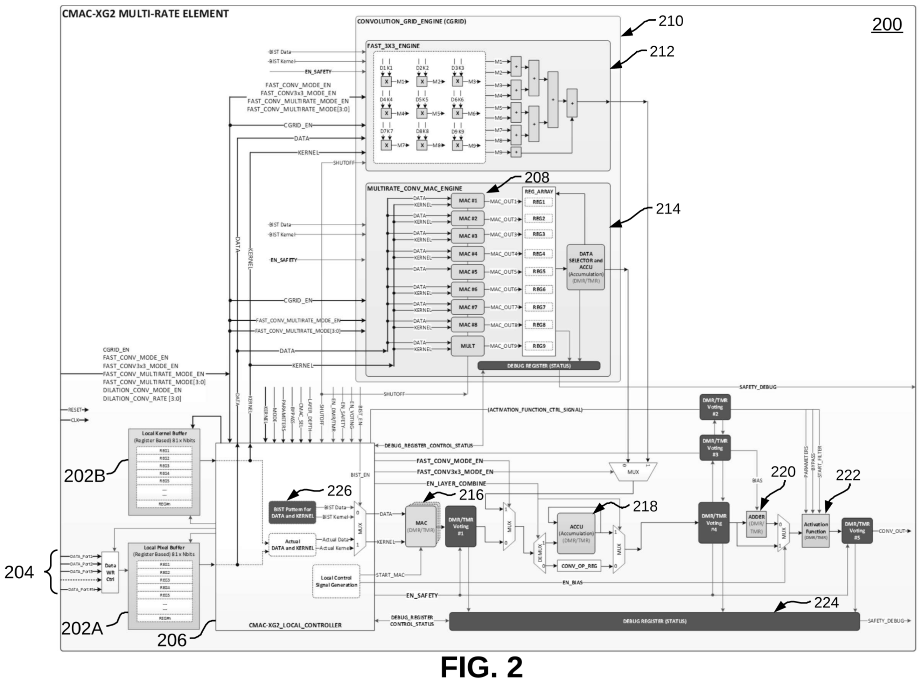

Referring now to **FIG. 1****,** a block diagram of an exemplary system 100 for performing multi-rate convolution in a neural network, such as a convolution neural network (CNN) is illustrated, in accordance with some embodiments of the present disclosure. As will be further explained in detail in conjunction with FIG. 2, the system 100 may implement a local controller 102. Further, the system 100 may implement a multi-rate convolution engine 104, a fast convolution engine 106, and a single MAC convolution data-path 108, each capable of performing a convolution operation. The local controller 102 may be coupled to the multi-rate convolution engine, the fast convolution engine, and the single MAC convolution data-path. The local controller 102 may be a computing device having data processing capability. In particular, the local controller 102 may have the capability for selecting and activating at least one of the multi-rate convolution engines, the fast convolution engine, and the single MAC convolution data-path for performing the convolution operation. The system 100 may further include a data storage 104. The local controller 102 may be implemented as a software application in the system 100, or an embedded hardware element in the in the system 100. Other examples of the local controller 102 may include, but are not limited to a desktop, a laptop, a notebook, a netbook, a tablet, a smartphone, a mobile phone, an application server, a web server, or the like.

Additionally, the local controller 102 may be communicatively coupled to an external device 110 for sending and receiving various data. Examples of the external device 110 may include, but are not limited to, a remote server, digital devices, and a computer system. The local controller 102 may connect to the external device 110 over a communication network 112. The local controller 102 may connect to external device 110 via a wired connection, for example via Universal Serial Bus (USB). A computing device, a smartphone, a mobile device, a laptop, a smartwatch, a personal digital assistant (PDA), an e-reader, and a tablet are all examples of external devices 108. For example, the communication network 112 may be a wireless network, a wired network, a cellular network, a Code Division Multiple Access (CDMA) network, a Global System for Mobile Communication (GSM) network, a Long-Term Evolution (LTE) network, a Universal Mobile Telecommunications System (UMTS) network, a Worldwide Interoperability for Microwave Access (WiMAX) network, a Dedicated Short-Range Communications (DSRC) network, a local area network, a wide area network, the Internet, satellite or any other appropriate network required for communication between the local controller 102 and the data storage 104 and the external device 110.

The local controller 102 may be configured to perform one or more functionalities that may include activating the multi-rate convolution engine to perform a multi-rate convolution. The multi-rate convolution may be performed by receiving a first input signal indicative of a convolution rate, a feature size, and a network load, selecting a set of MAC modules from the plurality of MAC modules based on the convolution rate and a filter size, and causing the set of MAC modules to parallelly perform the convolution operation.

Referring now to **FIG. 2****,** a block diagram representing an internal architecture of a system 200 (corresponding to system 100; and, also referred to as "accelerator", "Convolution Multiply and Accumulate - Xtended Generation2 engine" or "CMAC-XG2 engine") is illustrated in accordance with some embodiments. The system 200, as illustrated in FIG. 2, may be implemented as a hardware accelerator that may be suitable for Field Programmable Gate Array (FPGA) or Application Specific Integrated Circuits (ASIC) solutions. In other words, the system 200 may be implemented as a leaf-level element. The system 200 may be capable of performing parallel convolution and dilation convolution for different kernel sizes. The system 200 may also be capable of performing layer combining. The system 200 may be further capable of performing multi-rate one-dimensional (1D), two-dimensional (2D), or three-dimensional (3D) convolutions and dilation convolutions for different filter kernel sizes and dilation rates. The system 200 may support different filter kernel sizes (for example, 1x1, 3x3, 5x5, 7x7, 9x9, etc.) and different image depths for the feature map extraction. Moreover, based on feature map size and performance requirement, the System 200 may configure a plurality of MAC modules parallelly to support multi-rate fast convolution option, which may provide for convolution cycle time reduction.

In order to perform parallel convolution, various components of the system 200 be instantiated to perform row-wise parallel convolution operation on an input image or a feature map. Multiple parallel instances of the system 100 may allow to perform parallel convolution of input image or feature maps. As such, a system architecture for the system 200 may be built depending on the CNN architecture, performance requirement, and complexity. For example, complexity may be associated with number of layers, filter size, number of filter kernels, etc. Such architecture may enable reusing of computing resources (for example, DSP, registers, memory, etc.) more efficiently for performing convolution operations.

As illustrated in FIG. 2, the system 200 may include a local internal local buffer 202A that may be configured to store image or feature map pixel data along with kernel data. In other words, the local pixel buffer 202A may be configured to store the set of feature matrix; and the system 200 may further include a local kernel buffer 202B configured to store a kernel size. The local pixel buffer 202A and the local kernel buffer 202B may store the image and kernel data. It should be noted that a depth of the buffer may be decided based on the size of the kernel. For example, the kernel size may be 3x3, 5x5, 7x7, 9x9, etc. Further, for a maximum kernel size of 9x9, the buffer size may be (9x9 =) 81. A mode signal may indicate the kernel size for the current convolutional operation (i.e. kernel size that is used in a current layer). The plurality of MAC modules 208 may perform the convolution based on the mode value. The system 200 may further include a plurality of input data ports 204 for enabling parallel data loading. The system 200 may further include a functional safety mechanism and a built-in-self-test (BIST) module 226 for data and kernel, to perform leaf-level diagnostics.

The system 200 may include a Convolution Grid (CGRID) engine 210 that may further include a fast convolution engine 212. The fast convolution engine 212 may include a plurality of parallel multiplier and adder elements that may perform a fast convolution (for example, a fast 3x3 convolution). Each of the plurality of multiplier elements may be configured to perform a multiplication operation in a single clock cycle. Each of the plurality of adder elements may be configured to add data in the clock cycle. The fast convolution engine 212 may be activated on-demand by the user, for example, using a FAST_CONV_MODE_EN signal and a FAST_CONV3x3_MODE_EN signal. When the fast convolution engine 212 is activated, a 3x3 convolution may be performed in parallel with a pipeline adder structure. It should be noted that when the DNN network load is more or when a specific set of layers has a large number of filters (e.g. 3x3 filters) and the application demands high throughput, then the fast convolution engine 212 may be used for convolution. The fast convolution engine 212 may perform a fast convolution by causing the plurality of multiplier elements and the plurality of adder elements, to parallelly perform the convolution operation. The plurality of multiplier elements may perform the multiplication in 1 clock cycle. Further, the plurality of adder elements may work in pipelined manner and may add the data in each clock cycle. The fast convolution engine 212 may cause the plurality of MAC module 208 to run in parallel, with minimum of 1 MAC module to maximum 16 MAC modules in parallel, according to the plurality of MAC modules instantiated.

The CGRID engine 210 may include a multi-rate convolution MAC engine 214. The multi-rate convolution MAC engine 214 may include a plurality of Multiply and Accumulate (MAC) modules 208. In an example embodiment, as shown in FIG. 2, the plurality of MAC modules 208 may include nine MAC modules - a MAC#1 module, a MAC#2 module, a MAC#3 module, a MAC#4 module, a MAC#5 module, a MAC#6 module, a MAC#7 module, a MAC#8 module, and a MULT module. The multi-rate convolution MAC engine 214 may further include an accumulator element. Depending on the feature map size and the performance requirement, a user may select and enable one or more MAC modules, such that the selected MAC modules may run in parallel to perform the convolution. It should be noted that the maximum number of MAC modules can be increased as per the maximum kernel size.

Each of the plurality of MAC modules 208 may be configured to perform a convolution operation by applying a filter on image data, to generate convolution data. The system 200 may further include a local controller 206 (annotated as "CMAC-XG2_LOCAL_CONTROLLER" in FIG. 2). The local controller 206 may configure and control the convolution operations performed by the plurality of MAC modules 208. Following that, the local controller 206 may perform accumulation for layer combining, BIAS and activation functions.

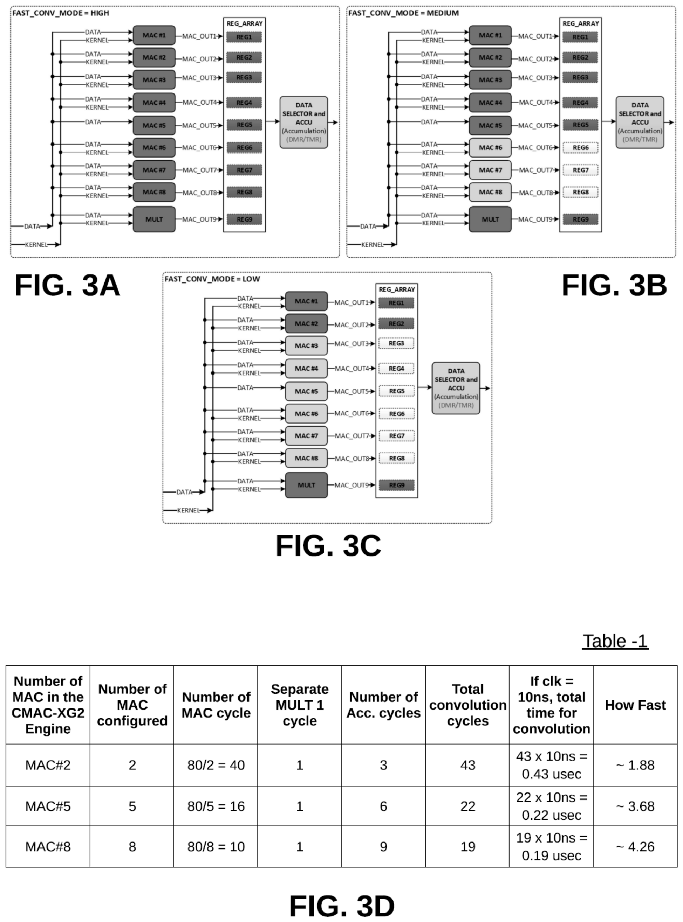

The multi-rate convolution MAC engine 214 may be activated on demand, based on a user requirement, for example, by enabling a FAST_CONV_MODE_EN signal, a FAST_CONV_MULTIRATE_MODE_EN signal, and a FAST_CONV_MODE [3:0] signal. FIGs. 3-6 illustrate example processes of enabling the MAC modules to perform multi-rate convolution for different kernel sizes of 9x9, 7x7, 5x5, 3x3, respectively,

Referring now to **FIG. 3A-3C****,** block diagrams of the multi-rate convolution MAC engine 214 with different example modes of fast convolution activated for a kernel size of 9x9 are illustrated, in accordance with some embodiments. **FIG. 3D** is a Table-1 showing the configuration of the multi-rate convolution MAC engine 214 in the above fast convolution modes. For the kernel size of 9x9, a total of (9X9=) 81 convolution cycles are to be performed.

As shown in FIG. 3A, a fast convolution mode "high" is activated. Accordingly, the MAC#1 module, the MAC#2 module, the MAC#3 module, the MAC#4 module, the MAC#5 module, the MAC#6 module, the MAC#7 module, the MAC#8 module, as well as the MULT module are activated. As shown in FIG. 3D, in the fast convolution mode "high", eight MAC modules and along with that the MULT module is activated. As such, total number of clock cycles is 80/8 = 10 (for MAC modules) and 1 cycle for the MULT module. Further, the number of cycles for the accumulator is 9. Accordingly, total number of convolution cycles is (number clock cycles for MAC modules (9) + number clock cycles for accumulator (9)) is 19. Assuming each clock cycle 10 nano second (ns), then total time of convolution for 81 cycles is 810 ns or .81 microseconds (ms). Accordingly, as shown in FIG. 3A and 3D, for 19 convolution cycles, the total time of convolution is (19X10 ns=) 0.19 ms. Therefore, rate of convolution (i.e. "how fast" the convolution) is (0.81/0.19=) approximately 4.26.

As shown in FIG. 3B, a fast convolution mode "medium" is activated, and accordingly, the MAC#1 module, the MAC#2 module, the MAC#3 module, the MAC#4 module, the MAC#5 module, as well as the MULT module) are activated. As shown in FIG. 3D, in the fast convolution mode "medium", five MAC modules and along with that the MULT module is activated. As such, total number of clock cycles is 80/5 = 16 (for MAC modules) and 1 cycle for the MULT module. Further, the number of cycles for the accumulator is 6. Accordingly, total number of convolution cycles is (number clock cycles for MAC modules (16) + number clock cycles for accumulator (6)) is 22. As shown in FIG. 3A and 3D, for 22 convolution cycles, the total time of convolution is (22X10 ns =) 0.22 ms. Therefore, rate of convolution (i.e. "how fast" the convolution) is (0.81/0.22=) approximately 3.68.

As shown in FIG. 3C, a fast convolution mode "low" is activated, and accordingly, the MAC#1 module and the MAC#2 module, along with the MULT module) are activated. As shown in FIG. 3D, in the fast convolution mode "low", two MAC modules and along with that the MULT module is activated. As such, total number of clock cycles is 80/2 = 40 (for MAC modules) and 1 cycle for the MULT module. Further, the number of cycles for the accumulator is 3. Accordingly, total number of convolution cycles is (number clock cycles for MAC modules (40) + number clock cycles for accumulator (3)) is 43. As shown in FIG. 3A and 3D, for 43 convolution cycles, the total time of convolution is (43X10 ns =) 0.43 ms. Therefore, rate of convolution (i.e. "how fast" the convolution) is (0.81/0.43=) approximately 1.88.

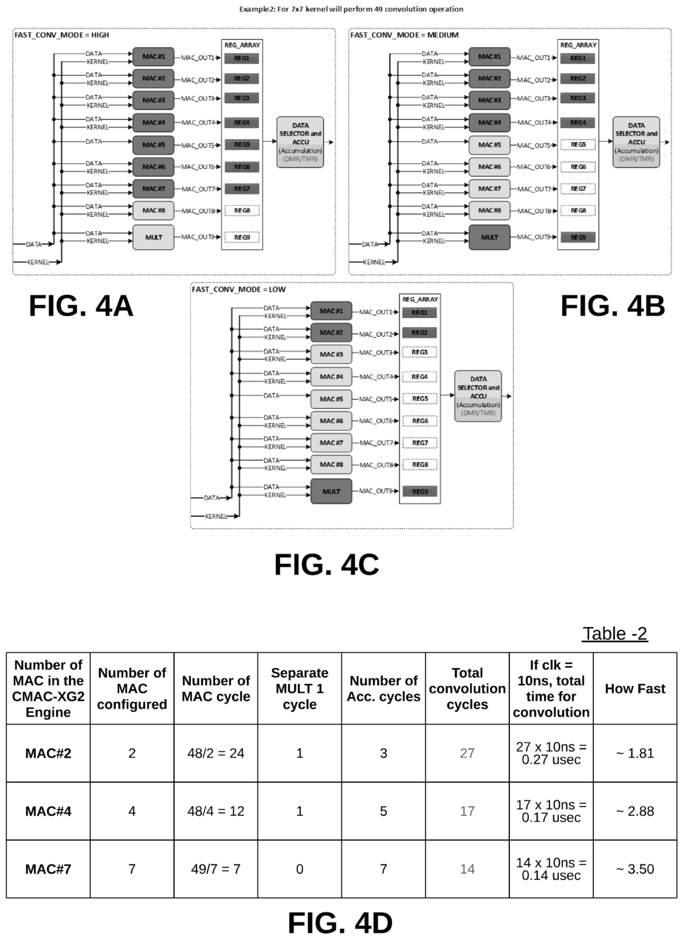

Referring now to **FIG. 4A-4C****,** block diagrams of the multi-rate convolution MAC engine 214 with different example modes of fast convolution activated for a kernel size of 7x7 are illustrated, in accordance with some embodiments. **FIG. 4D** is a Table-2 showing the configuration of the multi-rate convolution MAC engine 214 in the above fast convolution modes. For the kernel size of 7x7, a total of (7X7=) 49 convolution cycles are to be performed.

As shown in FIG. 4A, a fast convolution mode "high" is activated. Accordingly, the MAC#1 module, the MAC#2 module, the MAC#3 module, the MAC#4 module, the MAC#5 module, the MAC#6 module, and the MAC#7 module are activated. As shown in FIG. 4D, in the fast convolution mode "high", seven MAC modules are activated. As such, total number of clock cycles is 49/7 = 7 (for MAC modules, with 0 cycles for the MULT module). Further, the number of cycles for the accumulator is 7. Accordingly, total number of convolution cycles is (number clock cycles for MAC modules (7) + number clock cycles for accumulator (7)) is 14. Assuming each clock cycle 10 nano second (ns), then total time of convolution for 49 cycles is 490 ns or .49 microseconds (ms). Accordingly, as shown in FIG. 4A and 4D, for 14 convolution cycles, the total time of convolution is (14X10 ns =) 0.14 ms. Therefore, rate of convolution (i.e. "how fast" the convolution) is (0.49/0.14=) approximately 3.50.

As shown in FIG. 4B, a fast convolution mode "medium" is activated, and accordingly, the MAC#1 module, the MAC#2 module, the MAC#3 module, and the MAC#4 module along with MULT module) are activated. As shown in FIG. 4D, in the fast convolution mode "medium", four MAC modules along with the MULT module are activated. As such, total number of clock cycles is 48/4 = 12 (for MAC modules) and 1 cycle for the MULT module. Further, the number of cycles for the accumulator is 5. Accordingly, total number of convolution cycles is (number clock cycles for MAC modules (12) + number clock cycles for accumulator (5)) is 17. Accordingly, as shown in FIG. 4B and 4D, for 17 convolution cycles, the total time of convolution is (17X10 ns=) 0.17 ms. Therefore, rate of convolution (i.e. "how fast" the convolution) is (0.49/0.17=) approximately 2.88.

As shown in FIG. 4C, a fast convolution mode "low" is activated, and accordingly, the MAC#1 module and the MAC#2 module along with the MULT module) are activated. As shown in FIG. 4D, in the fast convolution mode "low", two MAC modules are activated. As such, total number of clock cycles is 48/2 = 24 (for MAC modules, with 1 cycle for the MULT module). Further, the number of cycles for the accumulator is 3. Accordingly, total number of convolution cycles is (number clock cycles for MAC modules (24) + number clock cycles for accumulator (3)) is 27. Accordingly, as shown in FIG. 4C and 4D, for 27 convolution cycles, the total time of convolution is (27X10 ns =) 0.27 ms. Therefore, rate of convolution (i.e. "how fast" the convolution) is (0.49/0.27=) approximately 1.81.

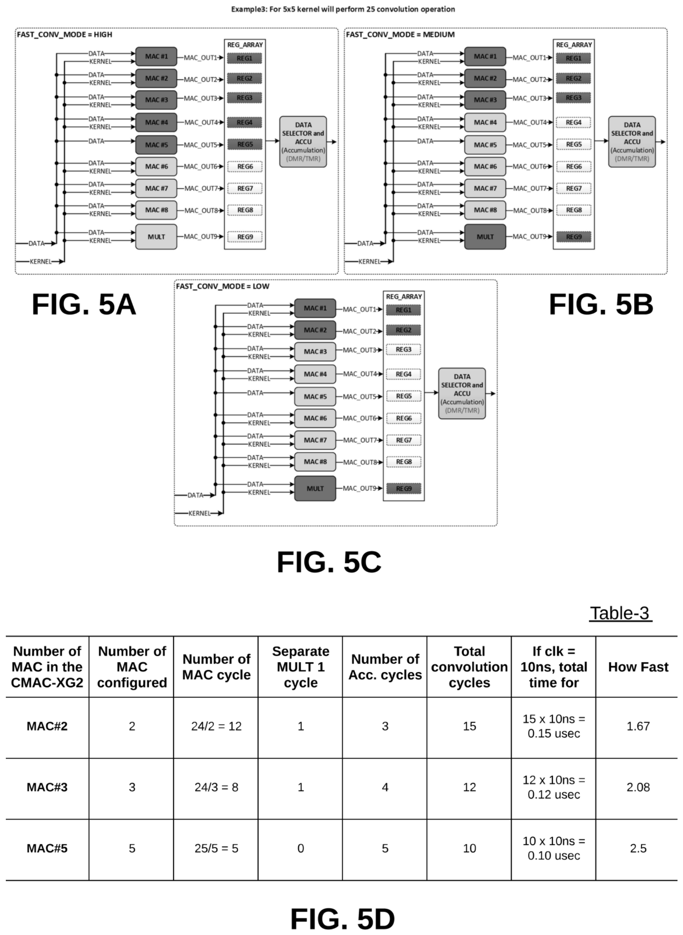

Referring now to **FIG. 5A-5C****,** block diagrams of the multi-rate convolution MAC engine 214 with different example modes of fast convolution activated for a kernel size of 5x5 are illustrated, in accordance with some embodiments. **FIG. 5D** is a Table-3 showing the configuration of the multi-rate convolution MAC engine 214 in the above fast convolution modes. For the kernel size of 5x5, a total of (5X5=) 25 convolution cycles are to be performed.

As shown in FIG. 5A, a fast convolution mode "high" is activated. Accordingly, the MAC#1 module, the MAC#2 module, the MAC#3 module, the MAC#4 module, and the MAC#5 module are activated. As shown in FIG. 5D, in the fast convolution mode "high", five MAC modules are activated. As such, total number of clock cycles is 25/5 = 5 (for MAC modules, with 0 cycles for the MULT module). Further, the number of cycles for the accumulator is 5. Accordingly, total number of convolution cycles is (number clock cycles for MAC modules (5) + number clock cycles for accumulator (5)) is 10. Assuming each clock cycle 10 nano second (ns), then total time of convolution for 25 cycles is 250 ns or .25 microseconds (ms). Accordingly, as shown in FIG. 5A and 5D, for 10 convolution cycles, the total time of convolution is (10X10 ns =) 0.10 ms. Therefore, rate of convolution (i.e. "how fast" the convolution) is (0.25/0.10=) approximately 2.50.

As shown in FIG. 5B, a fast convolution mode "medium" is activated, and accordingly, the MAC#1 module, the MAC#2 module, and the MAC#3 module, along with MULT module are activated. As shown in FIG. 5D, in the fast convolution mode "medium", three MAC modules along with the MULT module are activated. As such, total number of clock cycles is 24/3 = 8 (for MAC modules) and 1 cycle for the MULT module. Further, the number of cycles for the accumulator is 4. Accordingly, total number of convolution cycles is (number clock cycles for MAC modules (8) + number clock cycles for accumulator (4)) is 12. Accordingly, as shown in FIG. 5B and 5D, for 12 convolution cycles, the total time of convolution is (12X10 ns =) 0.12 ms. Therefore, rate of convolution (i.e. "how fast" the convolution) is (0.25/0.12=) approximately 2.08.

As shown in FIG. 5C, a fast convolution mode "low" is activated, and accordingly, the MAC#1 module and the MAC#2 module along with the MULT module) are activated. As shown in FIG. 5D, in the fast convolution mode "low", two MAC modules are activated. As such, total number of clock cycles is 24/2 = 12 (for MAC modules, with 1 cycle for the MULT module). Further, the number of cycles for the accumulator is 3. Accordingly, total number of convolution cycles is (number clock cycles for MAC modules (12) + number clock cycles for accumulator (3)) is 15. Accordingly, as shown in FIG. 5C and 5D, for 15 convolution cycles, the total time of convolution is (15X10 ns =) 0.15 ms. Therefore, rate of convolution (i.e. "how fast" the convolution) is (0.25/0.15=) approximately 1.67.

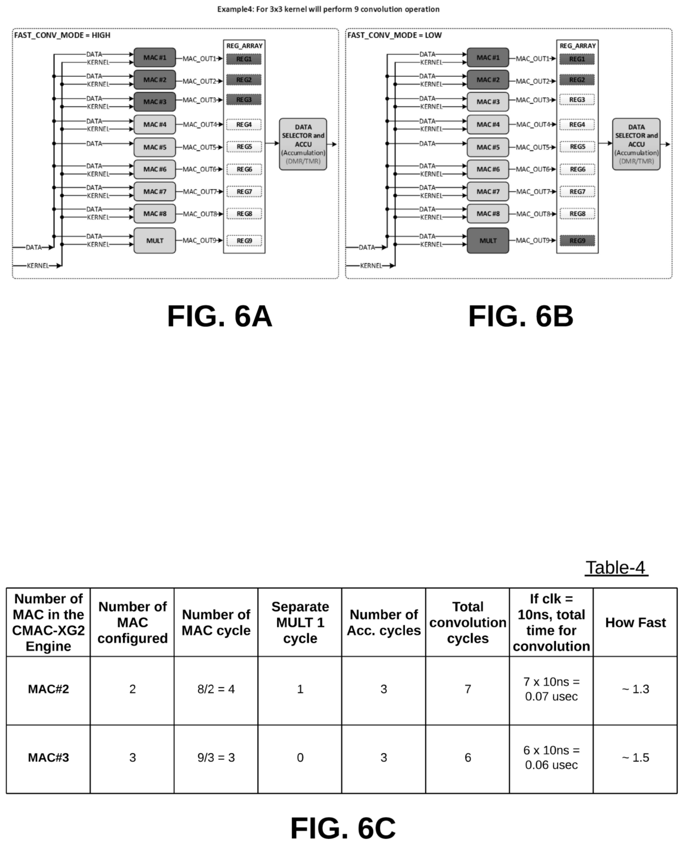

Referring now to **FIG. 6A-6B****,** block diagrams of the multi-rate convolution MAC engine 214 with different example modes of fast convolution activated for a kernel size of 3x3 are illustrated, in accordance with some embodiments. **FIG. 6C** is a Table-4 showing the configuration of the multi-rate convolution MAC engine 214 in the above fast convolution modes. For the kernel size of 3x3, a total of (3X3=) 9 convolution cycles are to be performed.

As shown in FIG. 6A, a fast convolution mode "high" is activated. Accordingly, the MAC#1 module, the MAC#2 module, and the MAC#3 module are activated. As shown in FIG. 6C, in the fast convolution mode "high", three MAC modules are activated. As such, total number of clock cycles is 9/3 = 3 (for MAC modules, with 0 cycles for the MULT module). Further, the number of cycles for the accumulator is 3. Accordingly, total number of convolution cycles is (number clock cycles for MAC modules (3) + number clock cycles for accumulator (3)) is 6. Assuming each clock cycle 10 nano second (ns), then total time of convolution for 9 cycles is 90 ns or .09 microseconds (ms). Further, as shown in FIG. 6A and 6C, for 6 convolution cycles, the total time of convolution is (6X10 ns =) 0.06 ms. Therefore, rate of convolution (i.e. "how fast" the convolution) is (0.09/0.06=) approximately 1.5.

As shown in FIG. 6B, a fast convolution mode "low" is activated, and accordingly, the MAC#1 module and the MAC#2 module, along with MULT module are activated. As shown in FIG. 6C, in the fast convolution mode "low", two MAC modules along with the MULT module are activated. As such, total number of clock cycles is 8/2 = 4 (for MAC modules) and 1 cycle for the MULT module. Further, the number of cycles for the accumulator is 5. Accordingly, total number of convolution cycles is (number clock cycles for MAC modules (4) + number clock cycles for accumulator (3)) is 7. Accordingly, as shown in FIG. 6B and 6C, for 7 convolution cycles, the total time of convolution is (7X10 ns =) 0.07 ms. Therefore, rate of convolution (i.e. "how fast" the convolution) is (0.09/0.07=) approximately 1.3.

Referring once again to FIG. 2, the system 200 may further include a single MAC convolution data-path 216. The single MAC convolution data-path 216 may include a single MAC module that may be configured to perform a convolution operation by applying a filter on image data, to generate convolution data. To this end, the local controller 206 may be coupled to the single MAC convolution data-path 216. The local controller 206 may be configured to activate the single MAC convolution data-path 216 to perform the convolution operation.

When the local pixel buffer 202A and the local kernel buffer 202B are loaded with respective data, the local controller 206 may cause the convolution operation using a "START_MAC" signal. For example, the local controller 206 may feed pixel data and kernel data to the single MAC module. A layer combine feature may be activated during working on multiple feature maps and in scenarios in which 3D convolution is required. For example, if 3x3 convolution is to be performed, then, at the end of 9^{th} iteration, the convoluted data may be moved to an accumulator (ACCU) module 218, for example, by enabling an EN_LAYER_COMBINE signal. In response to enabling of the EN_LAYER_COMBINE signal, the convoluted results may be accumulated. The accumulator module 218 may be configured to generate accumulated data based on accumulation of the convoluted data. In another example involving a 2D convolution scenario, during working on an intermediate layer, a single feature map may be required to be convoluted with a single kernel. In such a scenario, the EN_LAYER_COMBINE signal may be disabled. So, together the single MAC module and the accumulator module 218 along with the control signals (i.e. MODE, START_MAC, EN_LAYER_COMBINE, EN_BIAS and BYPASS, PARAMETERS, START_FILTER, etc.) may create a flexible convolution architecture.

The system 200 may further include an adder module 220 that may be configured to perform the BIAS function. The adder module 220 may enable adding any fixed "BIAS" to the convoluted result. When no BIAS is to be added, the adder module 220 may be bypassed. This may be controlled via an EN_BIAS signal. The system 200 may further include an activation function module 222 that may perform filtering (example: ReLU, Sigmoid or Logistic, and Hyperbolic tangent function-Tanh) based on the configuration parameter. In other words, the activation function module 222 may filter the added data to generate a convolution result for the image data. The activation function module 222 may filter the added data by using a filter function.

In a shut-off scenario, a host or the local controller 206 may send a command to turn-off the CMAC-XG2 engine 200. As will be understood by those skilled in the art, the host may host refer to a main processor or system that interacts with the accelerator chip (i.e. the CMAC-XG2 engine 200). The accelerator chip may be designed to offload specific computational tasks from the main processor in order to improve performance and efficiency for certain workloads. The host may communicate with the CMAC-XG2 engine 200, offloading tasks to it and receiving results back. This communication may happen through various interfaces such as PCIe (Peripheral Component Interconnect Express), NVLink, or other proprietary interfaces.

For the power intensive application requirements, the power or clock of the system 200 may be turned-off. In case of ASIC implementation, the system 200 power may be turned-off (with appropriate power gating techniques). Further, in case of FPGA, the individual System 200 clock may be turned-off. This feature, therefore, makes the system 200 more suitable for low-power requirements. Further, in some embodiments, for power demanding applications, when not in use or when any network does not need extra performance, the fast convolution engine 212 and the multi-rate convolution MAC engine 214 may be turned off.

As mentioned above, the system 200 may include configurable functional safety mechanism. This safety mechanism helps in detecting when there are Single Event Upset (SEU) and Single Event Transition (SET) fault events. The SEU and SET fault events may be due to bit-flip, which could cause a functional failure. To this end, the system 200 may include a functional safety unit configured to verify a functionality of each of the plurality of MAC modules 208, the single MAC module of the single MAC convolution data-path 216, the accumulator module 218, the adder module 220, and the activation function module 222. The functional safety unit may include the Built-In Self-Test (BIST) module 226 configured to validate an output generated from each of the plurality of MAC modules 208, the single MAC module, the accumulator module 218, the adder module 220, and the activation function module 222. The output may be validated based on a comparison of the output with a predefined pattern.

The functional safety unit may include one or more module redundancy units communicatively coupled to each of the local controller 206, the plurality of MAC modules 208, the single MAC module, the accumulator module 218, the adder module 220, and the activation function module 222. The one or more module redundancy units may be configured to eliminate one or more fault events during the convolution operation. In particular, the one or more module redundancy units may include a Double Module Redundancy (DMR) function, a Triple Module Redundancy (TMR) function, and one or more DMR/TMR voting units. The DMR function and the TMR function may be added in the data path and control path which may be configured and controlled (example: enabled or disabled) according to the configuration done by the host or the local controller 206. For example, the one more module redundancy units may be automatically triggered upon reaching a threshold temperature value. The DMR and the TMR function are explained though use case examples, as below:

### Use Case Example 1:

Enabling the TMR function may lead to three instances of the MAC module - ACCU module, ADDER module, and ACTIVATION FUNCTION module. These modules may connect to respective voting blocks.

### Use Case Example 2:

Enabling the TMR function may cause the input data to the respective voting block to be replicated thrice. Accordingly, voting may be performed.

### Use Case Example 3:

During operation, the system 200 may track permanent faults (for example, a bit-flip, a stuck0 fault, or a stuck1 fault) when detected, and update the internal diagnostics registers. When a user-defined fault threshold is reached, the diagnostics register values may help the host or the local controller 206 to take necessary corrective action.

### Use Case Example 4:

As mentioned above, the system 200 may include the BIST module 226. Whenever required, the BIST module 226 with internal BIST pattern (or an external BIST pattern) may be used to verify any functionality of the system 200 performed by the host or the local controller 206. This helps in identifying permeant STUCK 0 or 1 faults at the silicon level. The BIST module 226 may be one of a user configured or automatically configured through an internal self-test mechanism. The BIST module 226 may verify the desired functionality to assess against any faults (STUCK 0 or 1), using an internal or an external BIST pattern. Any BIST failure detected in the fault signal may be flagged to the host.

The functional safety unit may further include a debug register 224 configured to capture the one or more fault events associated with the convolution operation. The debug register 224 may be communicatively coupled to each of the one or more module redundancy units, thereby performing the convolution operation on the image data with functional safety mechanism. The debug register 224 with diagnostics feature may capture a number of fault events occurred while performing convolution operation, and adding BIAS and filtering. The host may enable and select the respective safety mechanism provided (at stages of data and control path), when the system 200 is working on a specific layer feature map. This allows safety mechanisms incorporated in the system 200 to be enabled or disabled, as per the application requirements. For example, assuming a CNN network has five layers, such that the fifth layer generates 4 feature maps of size 16x16 that may be used for flattening. As such, the host may enable the functional safety mechanisms for the fifth layer alone. For the Functional Safety mechanism, the following control signals may be used to create a flexible safety architecture: EN_DMR/TMR, EN_SAFETY, EN_VOTING, BIST_EN, DEBUG_REGISTER_CONTROL.

Further, the system 200 may implement a voting mechanism logic. The voting mechanism logic may operate when there is bit-flip. In such a scenario, by way of the voting mechanism logic, a voted value may be considered as a correct value.

The system 200 may be further configured to perform dilation convolution. The dilation convolution operation may enable processing of the required pixels along with the respective kernels. When the dilation convolution operation is required, the user may configure (on demand) a dilation convolution mode enable signal (DILATION_CONV_MODE_EN) and a dilation rate signal (DILATION_CONV_RATE [3:0]). Based on the configuration (i.e. signal), the local controller 206 may schedule data to the plurality of MAC modules 208 from the local pixel memory (buffer) 202. In the dilation convolution, the local controller 206 may automatically pick the required pixels based on the kernel size and dilation rate and schedule the convolution operation.

In particular, local controller 206 may receive a third input signal indicative of a dilation rate. The local controller 206 may further selecting pixels associated with the image data, based on the filter size and dilation rate. Thereafter, the local controller 206 may schedule the dilation convolution operation to be performed by at least one of: the fast convolution engine 212, the multi-rate convolution MAC engine 214, and the single MAC convolution data-path 216.

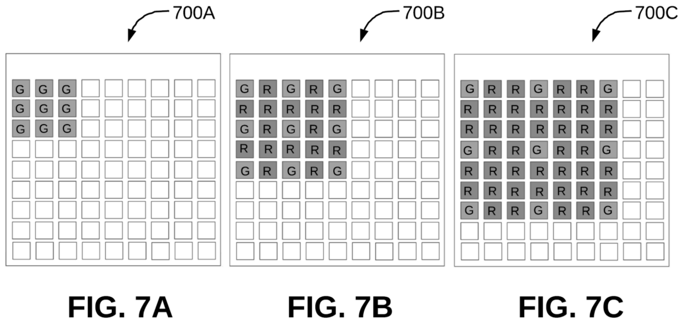

The system 200 may then automatically perform the convolution on the required pixels based on the configured dilation rate. The CMAC-XG2 engine 200 may support dilation convolution of 2D and 3D convolution, for various kernel sizes, for example 3x3, 5x5, 7x7 and 9x9. The dilation convolution operation is further explained in detail in conjunction with FIGs. 7A-7C.

Referring now to **FIGs. 7A-7C****,** processes of performing the dilation convolution operation in different kernels are illustrated, in accordance with some embodiments. In particular, FIG. 7A shows the dilation convolution operation 700A in a 3X3 kernel with dilation convolution rate of 1. FIG. 7B shows the dilation convolution operation 700B in a 3X3 kernel with dilation convolution rate of 2. FIG. 7C shows the dilation convolution operation 700C in a 3X3 kernel with dilation convolution rate of 3.

As shown in FIG. 7A, for dilation rate of 1, all the green pixels (annotated as "G" in FIGs. 7A-7C) may be convoluted. As shown in FIG. 7B, for the dilation rate of 2, all the pixels (25 in number) may be stored in the local pixel buffer 202. However, only green pixels ("G") may be convoluted. As shown in FIG. 7C, for the dilation rate of 3, all the pixels (49 in number) may be stored in the local pixel buffer 202, however, only green pixels ("G") may be convoluted. The system 200 may handle the data scheduling from the local pixel buffer 202 to the MAC module 208, to thereby simplify data scheduling.

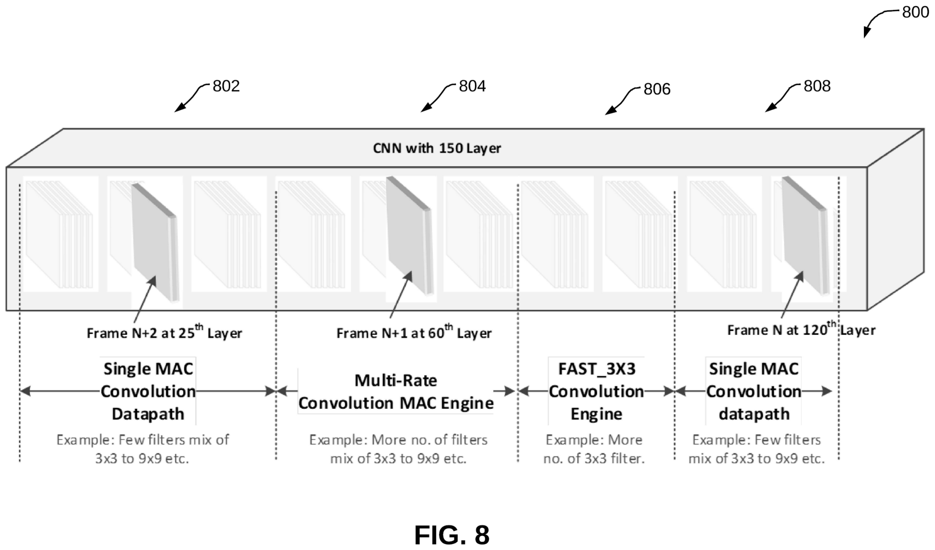

Referring now to **FIG. 8****,** a process diagram of performing multi-rate convolution by the system 200 for a CNN having 150 layers is illustrated, in accordance with some embodiments. The local controller 206 may control the convolution operations performed by the system 200. As mentioned above, the system 200 may include the multi-rate convolution MAC engine 214, the fast convolution engine 212, and the single MAC convolution data-path 216. The multi-rate convolution MAC engine 214 may include the plurality of MAC modules 208, each of which may be configured to perform a convolution operation by applying a filter on image data, to generate convolution data. The fast convolution engine 212 may include the plurality of multiplier elements, each of which may be configured to perform a multiplication operation in a single clock cycle. The fast convolution engine 212 may further include the plurality of adder elements, each of which may be configured to add data in the clock cycle. In an embodiment, the plurality of MAC modules 208 may implement the plurality of multiplier elements and the plurality of adder elements. In other words, the MAC modules 208 may be configured to perform the multiplication and addition operations of the multiplier elements and the adder elements. The single MAC convolution data-path 216 may include the single MAC module configured to perform a convolution operation by applying a filter on image data, to generate convolution data. Based on the performance requirement, one or more of the above three engines may be instantiated. Once the intermediate layer computation is complete, one or more of the above three engines may be grouped together, to work for a next input image frame (this may be handled by a scheduler). This enables better utilization of the resources and better throughput. For example, in video applications, processing of subsequent frames may happen in a pipeline.

The local controller 206 may be coupled to the multi-rate convolution MAC engine 214, the fast convolution engine 212, and the single MAC convolution data-path 216. The local controller 206 may be configured to select at least one of the multi-rate convolution MAC engine 214, the fast convolution engine 212, and the single MAC convolution data-path 216, to perform the convolution operation, based on a second input signal. The second input signal may be indicative of the feature size and the network load. Additionally, in some embodiments, the second input signal may be indicative of a number of layers, a performance requirement (e.g. frame rate), and a number of kernels. Therefore, the selection from the multi-rate convolution MAC engine 214, the fast convolution engine 212, and the single MAC convolution data-path 216 may be performed based on the second input signal; and the selection of the set of MAC modules from the plurality of MAC modules may be performed based on the first input signal.

In other words, the system 200 may be operated in multiple modes by enabling one or more of the three engines, namely the fast convolution engine 212, the multi-rate convolution MAC engine 214, and the single MAC convolution data-path 216. As will be appreciated by those skilled in the art, the DNNs are getting complex and handle large number of filters whereas the filter size is small, for example, 3x3, 1x1, etc. to this end, the above three engines may be used in different context based on the DNN network load. The multi-rate convolution MAC engine 214 may be enabled in different modes based on the filter size and DNN network load, as explained in conjunction with FIGs. 3-6.

When the DNN network load is more or when a specific set of layers has large number of filters (e.g. 3x3 filters) and the application demands high throughput, then the fast convolution engine 212 may be used for convolution. As mentioned above, the fast convolution engine 212 may include the plurality of multiplier elements, each of which may be configured to perform a multiplication operation in a single clock cycle. The fast convolution engine 212 may further include a plurality of adder elements, each of which may be configured to add data in the clock cycle. The local controller 206 may activate the fast convolution engine 212 to perform a fast convolution by causing the plurality of multiplier elements and the plurality of adder elements, to parallelly perform the convolution operation. Each of the plurality of MAC modules 208 may perform the multiplication and accumulation for each clock cycle. For example, for a 3x3 convolution, the MAC module may take 9 clock cycles. However, the multiplier element of the fast convolution engine 212 may perform the multiplication in 1 clock cycle. Further, the plurality of adder elements may work in pipelined manner and may add the data in each clock cycle.

Therefore, when the system 200 is scheduled (i.e. which engine of the above engines is to be used for which layer of the CNN), the local controller 206 may automatically route pixel data and kernel data to the respective engine, and the convolution may be performed.

As shown in FIG. 8, the sample CNN 800 may include 150 layers, where different input frames are processed in a pipeline. At 802, for a low number of filters mix of 3x3 to 9x9 filters, for example, till 25^{th} layer, the local controller 206 may select the single MAC convolution data-path 216 for performing the convolution operation. Accordingly, the single MAC convolution data-path 216 may apply a filter on the image data, to generate convolution data. At 804, for a higher number of filters mix of 3x3 to 9x9 filters (for example, till 60^{th} layer), the local controller 206 may select the multi-rate convolution MAC engine 214. The multi-rate convolution MAC engine 214 may receive a first input signal indicative of a convolution rate, a feature size, and a network load, and select a set of MAC modules from the plurality of MAC modules 208, based on the convolution rate and a filter size. Further, the multi-rate convolution MAC engine 214 may cause the set of MAC modules to parallelly perform the convolution operation. At 806, for a higher number of 3x3 filters, the local controller 206 may select the fast convolution engine 212 to perform the convolution operation. The fast convolution engine 212 may cause the plurality of multiplier elements and the plurality of adder elements, to parallelly perform the convolution operation. At 808, beyond 120^{th} layer (of the 150 layers), again for a low number of filters mix of 3x3 to 9x9 filters, the local controller 206 may select the single MAC convolution data-path 216 for performing the convolution operation.

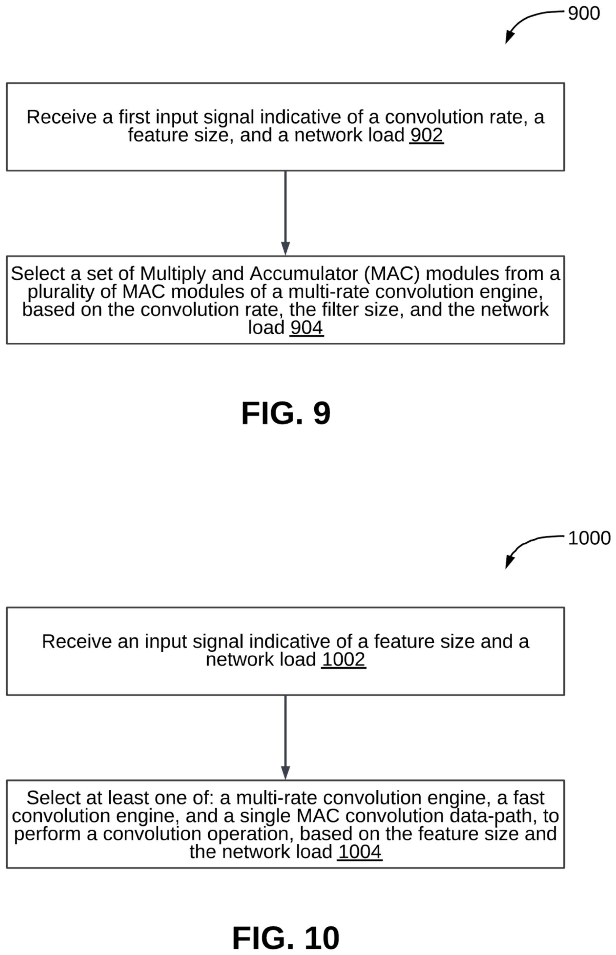

Referring now to **FIG. 9****,** a flowchart of a method 900 of performing multi-rate convolution in a neural network is illustrated, in accordance with some embodiments. The method 900 may further performed by the local controller 206 of the system 200.

At step 902, a first input signal indicative of a convolution rate, a feature size, and a network load may be received. At step 904, a set of Multiply and Accumulator (MAC) modules from a plurality of MAC modules 208 of a multi-rate convolution engine 214 may be selected, based on the convolution rate, the filter size, and the network load. Each of the plurality of MAC modules 208 may be configured to perform a convolution operation by applying a filter on image data, to generate convolution data.

Referring now to **FIG. 10****,** a flowchart of a method 1000 of performing multi-rate convolution in a neural network is illustrated, in accordance with some embodiments. The method 1000 may further performed by the local controller 206 of the system 200.

At step 1002, a (first) input signal indicative of a feature size and a network load may be received. At step 1004, at least one of: a multi-rate convolution engine 214, a fast convolution engine 212, and a single MAC convolution data-path 216 may be selected, to perform a convolution operation, based on the feature size and the network load. The multi-rate convolution engine 214 may include a plurality of Multiply and Accumulator (MAC) modules 208, each of which may be configured to perform a convolution operation by applying a filter on image data, to generate convolution data. The fast convolution engine 212 may include a plurality of multiplier elements, each of which may be configured to perform a multiplication operation in a single clock cycle, and a plurality of adder elements, each of which may be configured to add data in the clock cycle. The single MAC convolution data-path 216 may include a single MAC module configured to perform a convolution operation by applying a filter on image data, to generate convolution data.

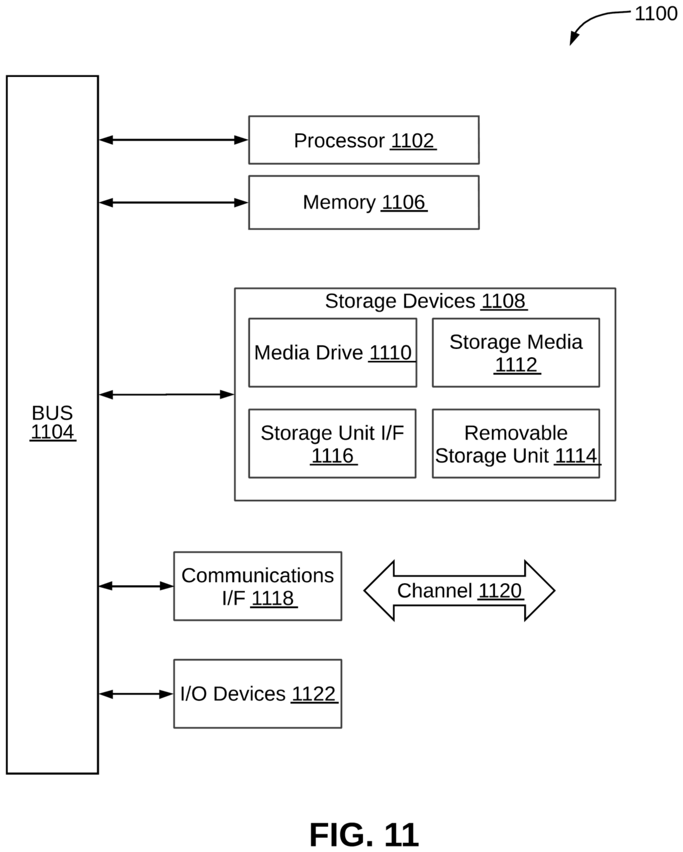

Referring now to **FIG. 11****,** an exemplary computing system 1100 that may be employed to implement processing functionality for various embodiments (e.g., as a SIMD device, client device, server device, one or more processors, or the like) is illustrated. Those skilled in the relevant art will also recognize how to implement the invention using other computer systems or architectures. The computing system 1100 may represent, for example, a user device such as a desktop, a laptop, a mobile phone, personal entertainment device, DVR, and so on, or any other type of special or general-purpose computing device as may be desirable or appropriate for a given application or environment. The computing system 1100 may include one or more processors, such as a processor 1102 that may be implemented using a general or special purpose processing engine such as, for example, a microprocessor, microcontroller or other control logic. In this example, the processor 1102 is connected to a bus 1104 or other communication media. In some embodiments, the processor 1102 may be an Artificial Intelligence (AI) processor, which may be implemented as a Tensor Processing Unit (TPU), or a graphical processor unit, or a custom programmable solution Field-Programmable Gate Array (FPGA).

The computing system 1100 may also include a memory 1106 (main memory), for example, Random Access Memory (RAM) or other dynamic memory, for storing information and instructions to be executed by the processor 1102. The memory 1106 also may be used for storing temporary variables or other intermediate information during the execution of instructions to be executed by processor 1102. The computing system 1100 may likewise include a read-only memory ("ROM") or other static storage device coupled to bus 1104 for storing static information and instructions for the processor 1102.

The computing system 1100 may also include storage devices 1108, which may include, for example, a media drive 1110 and a removable storage interface. The media drive 1110 may include a drive or other mechanism to support fixed or removable storage media, such as a hard disk drive, a floppy disk drive, a magnetic tape drive, an SD card port, a USB port, a micro-USB, an optical disk drive, a CD or DVD drive (R or RW), or other removable or fixed media drive. A storage media 1112 may include, for example, a hard disk, magnetic tape, flash drive, or other fixed or removable media that is read by and written to by the media drive 1110. As these examples illustrate, the storage media 1112 may include a computer-readable storage medium having stored therein particular computer software or data.

In alternative embodiments, the storage devices 1108 may include other similar instrumentalities for allowing computer programs or other instructions or data to be loaded into the computing system 1100. Such instrumentalities may include, for example, a removable storage unit 1114 and a storage unit interface 1116, such as a program cartridge and cartridge interface, a removable memory (for example, a flash memory or other removable memory module) and memory slot, and other removable storage units and interfaces that allow software and data to be transferred from the removable storage unit 1114 to the computing system 1100.

The computing system 1100 may also include a communications interface 1118. The communications interface 1118 may be used to allow software and data to be transferred between the computing system 1100 and external devices. Examples of the communications interface 1118 may include a network interface (such as an Ethernet or other NIC card), a communications port (such as for example, a USB port, a micro-USB port), Near field Communication (NFC), etc. Software and data transferred via the communications interface 1118 are in the form of signals which may be electronic, electromagnetic, optical, or other signals capable of being received by the communications interface 1118. These signals are provided to the communications interface 1118 via a channel 1120. The channel 1120 may carry signals and may be implemented using a wireless medium, wire or cable, fiber optics, or other communications medium. Some examples of the channel 1120 may include a phone line, a cellular phone link, an RF link, a Bluetooth link, a network interface, a local or wide area network, and other communications channels.

The computing system 1100 may further include Input/Output (I/O) devices 1122. Examples may include, but are not limited to a display, keypad, microphone, audio speakers, vibrating motor, LED lights, etc. The I/O devices 1122 may receive input from a user and also display an output of the computation performed by the processor 1102. In this document, the terms "computer program product" and "computer-readable medium" may be used generally to refer to media such as, for example, the memory 1106, the storage devices 1108, the removable storage unit 1114, or signal(s) on the channel 1120. These and other forms of computer-readable media may be involved in providing one or more sequences of one or more instructions to the processor 1102 for execution. Such instructions, generally referred to as "computer program code" (which may be grouped in the form of computer programs or other groupings), when executed, enable the computing system 1100 to perform features or functions of embodiments of the present invention.

In an embodiment where the elements are implemented using software, the software may be stored in a computer-readable medium and loaded into the computing system 1100 using, for example, the removable storage unit 1114, the media drive 1110 or the communications interface 1118. The control logic (in this example, software instructions or computer program code), when executed by the processor 1102, causes the processor 1102 to perform the functions of the invention as described herein.

One or more techniques for performing convolution in a convolution neural network (CNN) are disclosed. The techniques are implemented via an accelerator element or the system as described above. The system enables implementation of DNNs with better utilization of on-chip hardware resources. In the deeper layers, when the feature map size shrinks, leaf elements of the system are grouped to increase the throughput. A functional safety mechanism is provided to address the functional safety failures like SEU/SET fault. Further, multiple elements of the system can be instantiated to perform parallel convolution operation. The system is reconfigurable and therefore suitable to handle 1D, 2D and 3D convolution for various kernel sizes (for example, 3x3, 5x5, 7x7 and 9x9) which are common in large networks. For the large networks which need high throughput, the multi-rate convolution engine can be activated. The system is suitable for functional safety design, since the system contains configurable functional safety mechanism and configurable Built-In Self-Test (BIST) mechanism. The inbuilt BIST feature helps to verify the correct functionality against stuck 0/1 faults. Further, localized data buffer and kernel buffer can be configured according to the convolution kernel size that allows fast computation. Multiple data ports are provided that enable parallel pixel data and kernel loading into the system with slice logic. Moreover, the system supports parallel row-wise convolution on an image for different kernel size and image feature map with depth of any size. To handle large number of kernels and feature maps, the system can be grouped, and the data can be scheduled by the host, which enables increased performance. The system with its configurable activation function allows to enable different activation filters according to network requirements. Further, automatic functional safety feature activation is provided for user set temperature limits or via external sensors.

It is intended that the disclosure and examples be considered as exemplary only, with a true scope and spirit of disclosed embodiments being indicated by the following claims.

## Claims

1. A system for performing multi-rate convolution in a neural network, the system comprising:
a multi-rate convolution engine comprising:
a plurality of Multiply and Accumulator (MAC) modules, each of the plurality of MAC modules configured to perform a convolution operation by applying a filter on image data, to generate convolution data;
a local controller coupled to the multi-rate convolution engine, the local controller configured to activate the multi-rate convolution engine to perform a multi-rate convolution, wherein the multi-rate convolution comprises:
receiving a first input signal indicative of a convolution rate, a feature size, and a network load;
selecting a set of MAC modules from the plurality of MAC modules, based on the convolution rate, the filter size, and the network load; and
causing the set of MAC modules to parallelly perform the convolution operation.

2. The system as claimed in claim 1 further comprising:
a fast convolution engine comprising:
a plurality of multiplier elements, each of the plurality of multiplier elements configured to perform a multiplication operation in a single clock cycle; and
a plurality of adder elements, each of the plurality of adder elements configured to add data in the clock cycle;
wherein the local controller is coupled to the fast convolution engine, the local controller configured to activate the fast convolution engine to perform a fast convolution, by:
causing the plurality of multiplier elements and the plurality of adder elements, to parallelly perform the convolution operation.

3. The system as claimed in claim 2 further comprising:
a single MAC convolution data-path, comprising:
a single MAC module configured to perform a convolution operation by applying a filter on image data, to generate convolution data;
wherein the local controller is coupled to the single MAC convolution data-path, the local controller configured to activate the single MAC convolution data-path to perform the convolution operation.

4. The system as claimed in claim 3, wherein the local controller is further configured to select at least one of: the multi-rate convolution engine, the fast convolution engine, and the single MAC convolution data-path, to perform the convolution operation, based on a second input signal indicative of the feature size and the network load.

5. The system as claimed in claim 1, wherein the local controller is further to perform dilation convolution, by:
receiving a third input signal indicative of a dilation rate;
selecting pixels associated with the image data, based on the filter size and dilation rate; and
scheduling the dilation convolution operation to be performed by at least one of: the multi-rate convolution engine, the fast convolution engine, and the single MAC convolution data-path.

6. The system as claimed in claim 1, further comprising:
an accumulator module configured to generate accumulated data based on accumulation of the convoluted data;
an adder module configured to generate added data based on addition of a predefined value to the accumulated data; and
an activation function module configured to filter the added data to generate a convolution result for the image data, wherein the activation function module filters the added data by using a filter function.

7. The system as claimed in claim 1, further comprising:
a functional safety unit configured to verify a functionality of each of the plurality of MAC modules, the single MAC module, the accumulator module, the adder module, and the activation function module, and wherein the functional safety unit comprised:
a Built-In Self-Test (BIST) module configured to validate an output generated from each of the plurality of MAC modules, the single MAC module, the accumulator module, the adder module, and the activation function module, wherein the output is validated based on a comparison of the output with a predefined pattern;
one or more module redundancy units communicatively coupled to each of the local controller, the plurality of MAC modules, the single MAC module, the accumulator module, the adder module, and the activation function module, wherein the one or more module redundancy units are configured to eliminate one or more fault events during the convolution operation;
a debug register configured to capture the one or more fault events associated with the convolution operation, wherein the debug register is communicatively coupled to each of the one or more module redundancy units, thereby performing the convolution operation on the image data with functional safety mechanism.

8. The system as claimed in claim 7, wherein the one more module redundancy units are automatically triggered upon reaching a threshold temperature value.

9. The system as claimed in claim 7, wherein the one or more module redundancy units comprise one or more Double Module Redundancy (DMR) or Triple Module (TMR) units and one or more DMR/TMR voting units.

10. The system as claimed in claim 7, wherein the one or more fault events may indicate one or more of a bit flip, a stuck0 fault or a stuck1 fault.

11. The system as claimed in claim 7, wherein the debug register with diagnostics feature captures a number of fault events occurred while performing convolution operation, adding BIAS and Filtering.

12. The system as claimed in claim 7, wherein the BIST module is one of a user configured or automatically configured through an internal self-test mechanism.

13. The system as claimed in claim 1, further comprising:
a local kernel buffer configured to store the kernel size.

14. The system as claimed in claim 1, further comprising:
a local pixel buffer configured to store the set of feature matrix; and
a plurality of data ports connected to the local pixel buffer for parallel data loading.

15. A method of performing multi-rate convolution in a neural network, the method comprising:
receiving a first input signal indicative of a convolution rate, a feature size, and a network load; and
selecting a set of Multiply and Accumulator (MAC) modules from a plurality of MAC modules of a multi-rate convolution engine, based on the convolution rate, the filter size, and the network load,
wherein each of the plurality of MAC modules is configured to perform a convolution operation by applying a filter on image data, to generate convolution data.
